# EUROPEAN PATENT SPECIFICATION

(11) **EP 1 114 347 B1**
(45) Date of publication and mention of the grant of the patent: **12.02.2003**
(21) Application number: 98949866.2
(22) Date of filing: 02.11.1998
(51) Int. Cl.: G02B 6/44

(54) **OPTIC FIBRE CABLE**
FASEROPTISCHES KABEL
CABLE A FIBRES OPTIQUES

(30) Priority: 11.09.1998 CZ 289698
(43) Date of publication of application: 11.07.2001
(73) Proprietor: Kupilik, Pavel, 345 62 Holoyšov ; (CZ)
(72) Inventor: Kupilik, Pavel, 345 62 Holoyšov ; (CZ)
(74) Representative: Jeck, Anton, Dipl.-Ing.
(86) International application number: CZ9800043
(87) International publication number: WO00016146

(56) References cited:
- PATENT ABSTRACTS OF JAPAN vol. 009, no. 327 (P-415), 21 December 1985 & JP 60 153013 A (NIPPON DENSHIN DENWA KOSHA), 12 August 1985
- PATENT ABSTRACTS OF JAPAN vol. 014, no. 349 (P-1084), 27 July 1990 & JP 02 126208 A (KUBOTA LTD), 15 May 1990
- PATENT ABSTRACTS OF JAPAN vol. 095, no. 001, 28 February 1995 & JP 06 300944 A (HITACHI CABLE LTD), 28 October 1994

## Description

### Field of technics

The invention relates to an optic fibre cable which is determined for transmission networks.

### Prior state of the art

Many known optic fibre cable designs do not contain any layer which would block the fire by means of its features. Consequently, the fire protection for a wiring system, and therefore the systems functional capability, has been solved by a reserve cable putting on other place. Such a way of solution is expensive as to costs and technical realization.

Another form of optic fibre cable fire protection means its placing into protective metal tubes. With this way of protection solution, the design of the cable as such, is known.

A certain fire protection form means structural reinforcing of the outer cable thermal insulation where only the time limited protection is taken into account.

Document JP05060956A describes an optic cable comprising a flame-retardant metallic layer placed under the outer cable sheath.

### Essence of the invention

The optic fibre cable according to the invention is defined in the claim.

The optic fibre cable, the inside structure of which is wrapped round by outer sheath, consists of a central tube containing at least one optic fibre with a protection. Further, it consists of a traction element in a form of a bedding and/or a strand and of a filling cover. The essence of the design is rooted in that a fire blocking layer is located on the filling cover, under the outer cable sheath and consists of a glass-textile ribbon and a metallic foil.

The advantage of the optic fibre cable desing solution, according to the invention, means increased blocking against the flame propagation. This is rooted in enhancing the effectivity against fire spreading along the cable because the fire blocking layer inhibits the simultaneous burning of both outer and inside cable layers. This has been achived by separating both outer and inside inflammable materials of a cableby means of a non-combustible one or by fire blocking one, respectively.

### Survey of figures on drawings

The cable design, according to the invention, is explained on Fig. I where the cable is demonstraded in cros-section and in elevation with layers.

### Examples of cable realization

### Example 1:

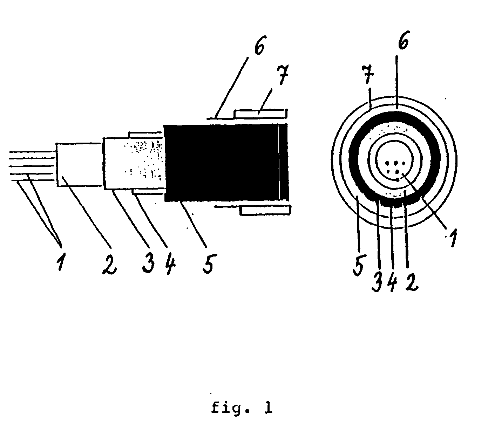

An optic fibre cable according to the invention has been made which has five optic fibres 1, with a protection, loosely situated in the central tube 2. On the outer surface of the central tube 2, the bedding 3 is located in order to secure a sufficient mechanical stiffness as to tensile stress. On the bedding 3, consisting of aramid fibres, two strands 4, made of glass-laminate, are situated for tensile stress transmission and on said strands the filling cover 5 is layed. On the filling cover 5, made of a halogenless material, the fire-blocking layer 6 is located which is formed of a combination of copper metallic foil on which a glass-textile ribbon is fitted. This whole inside cable structure is envelopped by the outer sheath 7 made of halogenless material, as can be seen on Fig. 1.

### Example 2 (comparative example)

The optic fibre cable has the single optic fibre 1, with a protection, located in the central tube 2. The inside cable structure is conforming with the one, given in preceding example, with the difference that the fire-blocking layer 6 consists of the wounded-around aluminium metallic foil only. On it the outer cable sheath 7, made of P.V.C., is located.

### Example 3 (comparative example)

The optic fibre cable has also five optic fibres 1 located in a central tube 2. In this case, the tensile element consists of two strands 4 only and the fire-blocking layer 6 consists of glass-textile ribbon formed by glass fibres connected by a textile coupling. The whole structure is also envelopped by outer cable sheath 7.

The cable structure functioning, according to the invention, is such that during fire the organic layers gradually burn down and, at the same time, the ashes layer develops. The thermal resistance of this developping layer reduces the final optic fibre temperature and, meanwhile, does not influence the propre function of the glass cable or the optic fibre one, respectively, i.e. the light transmission.

### Utilization in industry

The optic fibre cable, according to the invention, is determined for indoor as well as outdoor installations where an eventual fire could cause a putting out of service of connected systems or narrowing their functioning.

It can be used advantageously in control and supervisory systems of technological plants especially in nuclear as well as conventional power plants, in tunnel and underground traffic, in air traffic and health matters and further in telecommunications, cable television and computer networks.

## Claims

1. An optic fibre cable for transmission networks comprising an inside structure of said cable being enveloped by an outer sheath (7), said inside structure consisting of a central tube (2) in which at least one optic fibre (1) with protection is situated, a tensile element having the form of a bedding (3) and/or a strand (4), and consisting further of a filling cover (5) and of a fire-blocking layer (6), wherein
the fire-blocking layer (6) is situated on the filling cover (5) under the outer cable sheat (7) **characterized in that** the fire-blocking layer (6) consists of a combination of a copper metallic foil and a glass-textile ribbon fitted thereon.

## Patentansprüche

1. Glasfaserkabel für Übertragungsnetze, bestehend aus einer mit einem Außenmantel (7) ummantelten inneren Struktur des jeweiligen Kabels, wobei die innere Struktur aus einem zentralen Röhrchen (2), in dem sich zumindest eine Glasfaser (1) mit Schutz befindet, sowie einem Zugelement in form eines Kissens (3) und/oder einem verseilten Element (d.h. einem Strang) (4), und ferner aus einer flammwidrigen Schicht besteht, wobei die flammwidrige Schicht (6) an dem Füllmantel (5) unterhalb des Kabelaußenmantels (7) angebracht ist,
**dadurch gekennzeichnet,**
**dass** die flammwidrige Schicht (6) durch die Kombination einer Kupfermetallfolie und eines oberhalb von ihr angebrachten Glastextilbandes gebildet ist.

## Revendications

1. Le câble de fibres optiques pour les réseaux de transmission consiste en une structure intérieure du câble couverte d'une gaine extérieure (7), la structure intérieure conssistant en un tube central (2) dans lequel se trouve au moins une fibre optique (1) avec une protection, en un élément de traction sous forme de matelas (3) et/ou de Toron (4), en une enveloppe de remplissage (5) et en une couche résistante au feu (6) est placée sur l'enveloppe de remplissage (5) sous la gaine extérieure du câble (7), la couche résistante au feu (6) étant **caractérisée par** sa composition d'une feuille métallique en cuivre et d'un ruban de fibre de verre fixé dessus.
